(19) **Europäisches Patentamt**
**European Patent Office**
**Office européen des brevets**

(11) **EP 4 552 534 A1**

(12) **EUROPEAN PATENT APPLICATION**
published in accordance with Art. 153(4) EPC

(43) Date of publication:
14.05.2025 Bulletin 2025/20

(21) Application number: 23833578.0

(22) Date of filing: 19.05.2023

(51) International Patent Classification (IPC):
$A47C\ 27/14^{(2006.01)}$    $A47C\ 7/18^{(2006.01)}$
$B60N\ 2/90^{(2018.01)}$    $C08G\ 18/00^{(2006.01)}$
$C08G\ 18/48^{(2006.01)}$    $C08G\ 18/76^{(2006.01)}$
$C08G\ 18/79^{(2006.01)}$    $C08G\ 101/00^{(2006.01)}$

(52) Cooperative Patent Classification (CPC):
A47C 7/18; A47C 27/14; B60N 2/90; C08G 18/00;
C08G 18/48; C08G 18/76; C08G 18/79

(86) International application number:
PCT/JP2023/018699

(87) International publication number:
WO 2024/009627 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.07.2022 JP 2022108852
09.11.2022 JP 2022179573

(71) Applicant: Inoac Corporation
Nagoya-shi, Aichi 450-0003 (JP)

(72) Inventor: MIKUNI, Takumi
Anjo-shi, Aichi 446-8504 (JP)

(74) Representative: TBK
Bavariaring 4-6
80336 München (DE)

(54) **SEAT PAD**

(57) A seat pad (110) is a seat pad made of polyurethane foam obtained from a composition containing a polyol and an isocyanate. The seat pad (110) has a compression deflection coefficient of 2.8 or less as measured in accordance with JIS K6400-2 (2012 version) Method E.

Fig. 4

**Description**

TECHNICAL FIELD

The present disclosure relates to a seat pad.

This application is based on and claims the benefit of priority of Japanese Patent Application No. 2022-108852 filed on July 6, 2022, and Japanese Patent Application No. 2022-179573 filed on November 9, 2022, the entire contents of which are incorporated herein by reference.

BACKGROUND ART

Patent Literature 1 and Patent Literature 2 describe seat cushion materials using polyether polyol (PPG).

CITATIONS LIST

PATENT LITERATURE

Patent Literature 1: JP 2019-107933 A
Patent Literature 2: JP 2022-039004 A

SUMMARY OF INVENTION

TECHNICAL PROBLEMS

In a seat pad mounted on a vehicle such as an automobile, a ship, or an airplane, improvement of ride comfort performance is required. Examples of the ride comfort performance include good bending, hardly giving a bottom touch feeling, durability for maintaining the posture of the seated person, and front surface softness for improving the touch of the seat when seated. However, it is difficult for the conventional seat pad to sufficiently improve the ride comfort performance.

The present disclosure has been made in view of the above circumstances, and an object of the present disclosure is to improve ride comfort performance of a seat pad by improving at least one of good bending, hardly giving a bottom touch feeling, durability, and front surface softness.

The present disclosure can be implemented in the following forms.

SOLUTIONS TO PROBLEMS

<First aspect>

[1] A seat pad made of a polyurethane foam obtained from a composition containing a polyol and an isocyanate, the seat pad having a compression deflection coefficient of 2.8 or less as measured in accordance with JIS K6400-2 (2012 version) Method E.

<Second aspect>

[2] A seat pad made of a polyurethane foam obtained from a composition containing a polyol and an isocyanate, wherein

as the polyol, a polyether polyol having an ethylene oxide unit content of 50 mol% or more when a total amount of alkylene oxide units is 100 mol% is contained, and

$$F1/F3 < 1.0$$

is satisfied when
a portion between a front surface and a back surface are divided into five equal parts in a thickness direction, which are defined as a first layer, a second layer, a third layer, a fourth layer, and a fifth layer in this order from the front surface side,

an Asker F hardness of the third layer measured from the front surface side is defined as F3, and

an Asker F hardness of the first layer measured from the front surface side is defined as F1.

ADVANTAGEOUS EFFECTS OF INVENTION

The seat pad of the present disclosure can improve ride comfort performance.

BRIEF DESCRIPTION OF DRAWINGS

Fig. 1 is a diagram illustrating a vehicle sheet including a polyurethane foam seat pad.

Fig. 2 is a diagram for describing a first layer to a fifth layer in a seat pad of the second aspect.

Fig. 3 is a top view of an example of a seat pad of the first aspect.

Fig. 4 is a sectional view taken along the line V-V in Fig. 3.

DESCRIPTION OF EMBODIMENTS

Here, desirable examples of the present disclosure will be described.

[3] The seat pad according to [2], wherein $0.30 \leq F1/F3 \leq 0.70$ is satisfied.

[4] The seat pad according to [2] or [3], wherein as the isocyanate, carbodiimide-modified diphenylmethane diisocyanate is contained.

[5] The seat pad according to any one of [2] to [4], the seat pad having a compression deflection coefficient of 2.8 or less as measured in accordance with JIS K6400-2 (2012 version) Method E.

[6] The seat pad according to any one of [2] to [5], the seat pad having a rebound resilience of 55% or less as measured in accordance with JIS K6400-3 (2011 version).

[7] The seat pad according to any one of [2] to [6], the seat pad having a stress relaxation rate of 15% or less.

[8] The seat pad according to any one of [2] to [7], the seat pad having a hysteresis loss rate of 20% or less as measured in accordance with JIS K6400-2 (2012 version) Method E.

Hereinafter, the present disclosure will be described in detail. In the present specification, the description using "to" for a numerical range, the lower limit value and the upper limit value are included unless otherwise specified. For example, the expression "10 to 20" includes both the lower limit value "10" and the upper limit value "20". That is, "10 to 20" has the same meaning as "10 or more and 20 or less".

1. Seat pad 110 (first aspect)

A seat pad 110 is a seat pad made of polyurethane foam obtained from a composition containing a polyol and an isocyanate. The seat pad 110 has a compression deflection coefficient of 2.8 or less as measured in accordance with JIS K6400-2 (2012 version) Method E.

(1) Composition

The seat pad 110 is made of polyurethane foam, and is preferably made of flexible polyurethane foam. The polyurethane foam is obtained from a composition containing a polyol and an isocyanate. The composition may contain at least one selected from a foaming agent, a catalyst, a foam stabilizer, and a crosslinking agent as an optional component.

The polyol is not particularly limited. The polyol preferably includes a polyol (a) having an EO unit content of 50 mol% or more when the total amount of the alkylene oxide units is 100 mol%. For the polyol (a), the description in the section "Seat pad 10 (second aspect)" described later is applied as it is, and the description thereof is omitted. For the components other than the polyol (a) in the composition, the description in the section "Seat pad 10 (second aspect)" described later is applied as it is, and the description thereof is omitted.

(2) Physical property of seat pad 110

(2.1) Compression deflection coefficient

The compression deflection coefficient is obtained as a value obtained by taking a force-deflection curve in accordance with JIS K6400-2 (2012 version) Method E, and dividing the force at 65% compression by the force at 25% compression.

Compression deflection coefficient = force at 65% compression/force at 25% compression

It is usually said that a polyurethane foam with a small compression deflection coefficient bends well. The deflection characteristic in a low load range can be an index of a bottom touch feeling when a person sits down. The deflection characteristic in a high load range (for example, 700 N or more and 980 N or less) can be an index of a bottom touch feeling when vibration is applied during driving or the like. The inventors of the present application have obtained a new finding that setting the compression deflection coefficient to 2.8 or less in a seat pad makes it possible to make a bottom touch feeling difficult to be felt, mainly in a high load range. That is, the technology of the present disclosure has been developed based on the findings that the seat pad 110 that bends well and hardly gives a bottom touch feeling can be obtained by reducing the compression deflection coefficient.

The compression deflection coefficient (in accordance with JIS K6400-2 (2012 version) Method E) of the seat pad 110 is 2.8 or less, preferably 2.7 or less, and more preferably 2.5 or less. The lower limit value of the compression deflection coefficient of the seat pad 110 is not particularly limited, and may be, for example, 2.0 or more, or 2.2 or more.

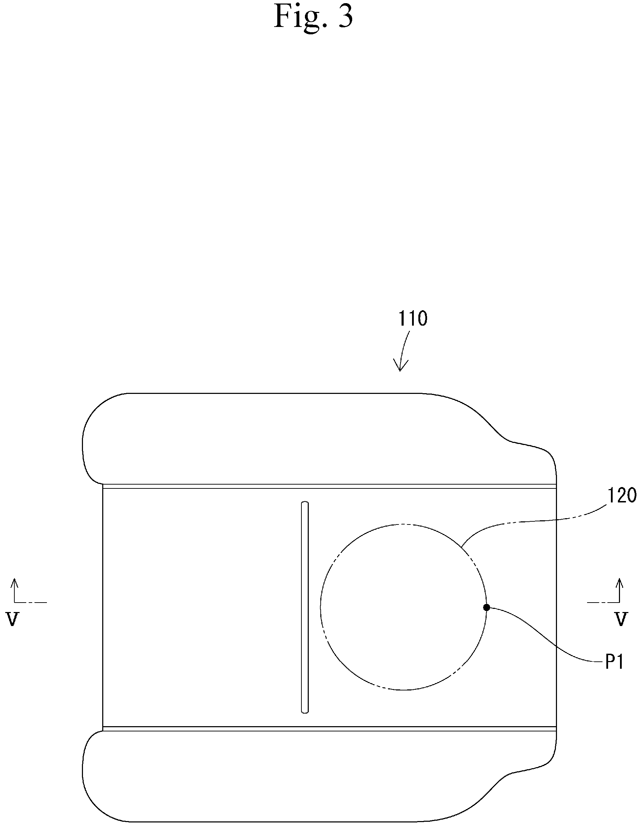

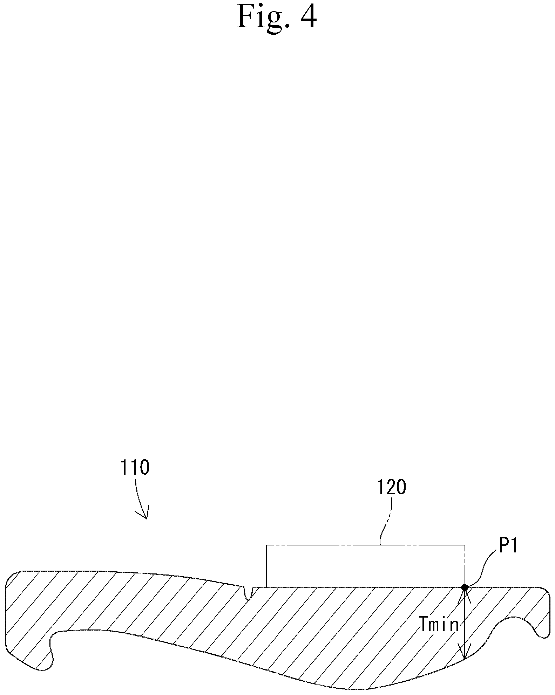

As a test piece used for the measurement, the entire seat pad 110 including skins is used as the test piece. For example, in the seat pad 110 in Figs. 3 and 4, the compression deflection coefficient can be measured as follows. A pressurizing plate 120 is applied to a portion of the seat pad where the buttocks touch, and a force-deflection curve is obtained in accordance with JIS K6400-2 (2012 version) Method E. In obtaining the force-deflection curve, the load at which it turns from pressurization to decompression during compression of the seat pad was set at 980 N.

The force at 65% compression and the force at 25% compression are obtained as follows. The initial thickness (thickness before compression) of a thickness $T_{min}$ at the thinnest position P1 located under the pressurizing plate 120 and having the smallest thickness is taken as 100%, and the force when the thickness $T_{min}$ at the thinnest position P1 is compressed by 25% of the initial thickness to become 75% of the initial thickness is defined as the force at 25% compression. A force when the thickness $T_{min}$ at the thinnest position P1 is compressed by 65% of the initial thickness to become a thickness of 35% is defined as a force at the time of 65% compression. Then, the compression deflection coefficient is calculated based on the above mathematical formula.

The shape of the seat pad is not limited to the shapes in Figs. 3 and 4. For example, the shape of the seat pad may be a rectangular parallelepiped as in Experimental Examples 1 to 10 described later. In Experimental Examples 1 to 6 and 8 to 10 described later, since the test piece has a rectangular parallelepiped shape having a length of 400 mm, a width of 400 mm, and a height of 100 mm including skins, the initial thickness (thickness before compression) of the thickness $T_{min}$ at the thinnest position P1 is 100 mm, the thickness at 25% compression is 75 mm, and the thickness at 65% compression is 35 mm. In Experimental Example 7 described later, since the test piece has a rectangular parallelepiped shape having a length of 400 mm, a width of 400 mm, and a height of 50 mm including skins, the initial thickness (thickness before compression) of the thickness $T_{min}$ at the thinnest position P1 is 50 mm, the thickness at 25% compression is 37.5 mm, and the thickness at 65% compression is 17.5 mm.

(2.2) Hysteresis loss rate

The hysteresis loss rate (in accordance with JIS K6400-2 (2012 version) Method E) of the seat pad 110 is preferably 22% or less, preferably 20% or less, and may be 18% or less, or 15% or less from the viewpoint of durability. The lower limit of the hysteresis loss rate is not particularly limited, but is usually 5.0% or more.

The test piece used for the measurement and how to obtain the force-deflection curve are the same as in (2.1) Compression deflection coefficient.

(2.3) Density

The density of a central portion of the seat pad 110 excluding the front surface and the back surface is not particularly limited. From the viewpoint of weight reduction, the density is preferably 100 kg/m$^3$ or less, more preferably 80 kg/m³ or less, and still more preferably 75 kg/m³ or less. The lower limit value of the density is not particularly limited, but is usually 20 kg/m³ or more. From these viewpoints, the density is preferably 20 kg/m³ or more and 100 kg/m³ or less, and can be set in a range in which the lower limit value and the upper limit value are appropriately combined.

The density of the central portion excluding the front surface and the back surface can be measured as follows.

A rectangular parallelepiped test piece having a length of 100 mm, a width of 100 mm, and a height of 50 mm excluding the skins is taken from the central portion of the seat pad 110. A height direction of the test piece is made to coincide with a front surface-back surface direction of the seat pad 110. The mass of the collected test piece is measured, and the mass of the test piece is divided by the volume to calculate the density (kg/m³) of the central portion.

(2.4) 25% Hardness

The 25% hardness of the seat pad 110 (in accordance with JIS K6400-2 (2012 version) Method D) is not particularly limited. The 25% hardness of the entire seat pad 110 is preferably 80 N or more and 400 N or less, more preferably 120 N or more and 300 N or less, and still more preferably 160 N or more and 280 N or less.

The test piece to be measured for hardness is a rectangular parallelepiped having a length of 400 mm a width of 400 mm including the front and back skins. For example, in Experimental Examples 1 to 6 and 8 to 10 described later, a rectangular parallelepiped having a length of 400 mm, a width of 400 mm, and a height of 100 mm including the skins is used as a test piece. In Experimental Example 7 described later, a rectangular parallelepiped having a length of 400 mm, a width of 400 mm, and a height of 50 mm including the skins is used as a test piece. For the measurement, a pressurizing plate having a diameter of 200 mm is used. At the time of measurement, the test piece is placed on a support plate of a tester such that the center of the test piece corresponds to the center of the pressurizing plate.

(2.5) Stress relaxation rate

The stress relaxation rate of the seat pad 110 is preferably 24% or less, more preferably 20% or less, and still more preferably 15% or less from the viewpoint of durability, and it may be 12% or less, 10% or less, 9.0% or less, or 8.0% or less. The lower limit value of the stress relaxation rate is not particularly limited, and may be, for example, 1.0% or more. The smaller the stress relaxation rate is, the smaller the amount of fatigue of the urethane after seating is, and the better the durability is. The stress relaxation rate tends to increase as the thickness of the seat pad 110 decreases. The technology of the present disclosure is particularly useful in that the stress relaxation rate can be reduced even in the seat pad 110 with a reduced thickness.

The stress relaxation rate (%) can be measured as follows.

As a test piece used for the measurement, the entire seat pad 110 including skins is used as the test piece. A height direction of the test piece is made to coincide with a front surface-back surface direction of the seat pad 110. A circular pressurizing plate 120 with a diameter of 200 mm is used to compress the test piece by a distance of 75% of the initial thickness of the polyurethane foam at a rate of 50 mm/min. The pressurizing plate 120 is applied to a portion of the seat pad 110 where the buttocks touch. In the seat pad 110, the thickness at the position under the center position of the pressurizing plate 120 is defined as an initial thickness (thickness before compression). Thereafter, the load is removed, and the test piece is left for 1 minute. Then, a load is applied again at the same speed, the pressurizing plate is stopped when a load of 196 N (20 kgf) is applied, and the load after leaving for 5 minutes is read. Then, the stress relaxation rate is calculated by the following formula.

Stress relaxation rate (%) = 100 × [load when pressurizing plate is stopped (196 N) - load after leaving for 5 minutes]/ load when pressurizing plate is stopped (196 N)

The shape of the seat pad is not limited to the shapes in Figs. 3 and 4. For example, the shape of the seat pad may be a rectangular parallelepiped as in Experimental Examples 1 to 10 described later. In Experimental Examples 1 to 6 and 8 to 10 described later, since a rectangular parallelepiped having a length of 400 mm, a width of 400 mm, and a height of 100 mm including the skins is used as the test piece, the thickness at the position under the center position of the pressure plate 120, i.e., the initial thickness (thickness before compression), is 100 mm. In Experimental Example 7 described later, since a rectangular parallelepiped having a length of 400 mm, a width of 400 mm, and a height of 50 mm including the skins is used as the test piece, the thickness at the position under the center position of the pressure plate 120, i.e., the initial thickness (thickness before compression), is 50 mm.

(2.6) Rebound resilience

The rebound resilience (in accordance with JIS K6400-3 (2011 version)) of the seat pad 110 is preferably 70% or less, more preferably 60% or less, still more preferably 55% or less, and it may be 50% or less, 46% or less, or 44% or less from the viewpoint of improving the ride comfort performance. The lower limit value of the rebound resilience of the seat pad 110 is not particularly limited, and it may be, for example, 10% or more, 20% or more, or 30% or more.

2. Method for producing seat pad 110

For the seat pad 110, the description in the section of "2. Method for producing seat pad 10" described later is applied as it is, and the description thereof is omitted.

3. Operation and effect of present embodiment

In recent years, with reduction in thickness and weight of the seat pad 110 of an automobile, a ship, an aircraft, or the like, securing of ride comfort performance has been a problem. Examples of the ride comfort performance include good bending and hardly giving a bottom touch feeling.

Since the seat pad 110 of the present embodiment has a small deflection coefficient, the seat pad bends well, and hardly gives a bottom touch feeling. For example, the seat pad 110 of the present embodiment can secure ride comfort performance even though a so-called placing slab is not placed, thus contributing to weight reduction, thickness reduction, and cost reduction of the seat pad 110.

4. Seat pad 10 (second aspect)

A seat pad 10 is a seat pad made of polyurethane foam obtained from a composition containing a polyol and an isocyanate. The polyol includes a polyether polyol having an ethylene oxide unit content of 50 mol% or more when the total amount of the alkylene oxide units is 100 mol%. The seat pad 10 satisfies F1/F3 < 1.0 when the portion between a front surface 10A and a back surface 10B is divided into five equal parts in the thickness direction, which are defined as a first layer 11, a second layer 12, a third layer 13, a fourth layer 14, and a fifth layer 15 in this order from the front surface 10A side, the Asker F hardness of the third layer 13 measured from the front surface 10A side is defined as F3, and the Asker F hardness of the first layer 11 measured from the front surface 10A side is defined as F1.

(1) Composition

The seat pad 10 is made of polyurethane foam, and is preferably made of flexible polyurethane foam. The polyurethane foam is obtained from a composition containing a polyol and an isocyanate. The composition may contain at least one selected from a foaming agent, a catalyst, a foam stabilizer, and a crosslinking agent as an optional component. Each component of the composition will be described.

(1.1) Polyol

The polyol includes a polyol (a) having an EO unit content of 50 mol% or more when the total amount of the alkylene oxide units is 100 mol%. Hereinafter, the EO unit content refers to a content when the total amount of the alkylene oxide units is 100 mol%.

The polyol (a) is a polyether polyol having an EO unit content of 50 mol% or more. The EO unit content is preferably 60 mol% or more, more preferably 70 mol% or more, still more preferably 75 mol% or more, and particularly preferably 80 mol% or more from the viewpoint of reducing the stress relaxation rate and the hysteresis loss rate. The upper limit value of the EO unit content is not particularly limited, and it may be 100 mol%. Only one of the polyol (a) may be used, or two or more thereof may be used in combination. For example, a polyol having an EO unit content of 75 mol% and a polyol having an EO unit content of 80 mol% may be used in combination.

Examples of the alkylene oxide other than the ethylene oxide used for the production of the polyol (a) include propylene oxide and butylene oxide. As the alkylene oxide other than the ethylene oxide, propylene oxide is suitable. As the polyol (a), a polyol in which all of the units excluding the EO units are propylene oxide units (hereinafter, abbreviated as "PO unit") can be preferably used.

The number-average molecular weight of the polyol (a) is not particularly limited. The number-average molecular weight of the polyol (a) is preferably 20,000 or less, more preferably 15,000 or less, still more preferably 10,000 or less, still more preferably 7,000 or less, and still more preferably 5,000 or less from the viewpoint of achieving low repulsion. The lower limit of the number-average molecular weight of the polyol (a) is usually 2,000 or more and may be 1,000 or more.

The number-average molecular weight of the polyol (a) can be measured by gel permeation chromatography (GPC). When the polyol (a) is a commercially available product, the catalog value may be employed as the number-average molecular weight of the polyol (a).

The number of functional groups of the polyol (a) is not particularly limited. The number of functional groups of the polyol (a) is preferably less than 3, more preferably 2.5 or less, and still more preferably 2 from the viewpoint of reducing the stress relaxation rate and the hysteresis loss rate. The number of functional groups in the polyol (a) is usually 2 or more. The polyol (a) is preferably a polyoxyethylene/propylene glycol copolymer having an EO unit content of 50 mol% or more.

When the number of functional groups of the polyol (a) is the above value, formation of a network structure can be suppressed when the polyol and the isocyanate react with each other. It is presumed that in the polyurethane foam formed in this manner, entanglement of polyurethane molecules during compression is suppressed, and the stress relaxation rate and the hysteresis loss rate are reduced.

In the present disclosure, the number of functional groups means the average of the number of active hydrogen groups of each component contained in the polyol. When the polyol is a commercially available product, the catalog value may be employed as the number of functional groups of the polyol (a).

The content of the polyol (a) is not particularly limited. The content of the polyol (a) is more than 0 parts by mass, preferably 20 parts by mass or more, more preferably 40 parts by mass or more, and may be 50 parts by mass or more, 60 parts by mass or more, 70 parts by mass or more, or 80 parts by mass or more when the total amount of the polyol is 100 parts by mass. The upper limit value of the content of the polyol (a) is preferably 95 parts by mass or less, more preferably 93 parts by mass or less, and still more preferably 90 parts by mass or less from the viewpoint of moldability. From these viewpoints, the content of the polyol (a) is preferably 20 parts by mass or more and 95 parts by mass or less, and can be set in a range in which the lower limit value and the upper limit value are appropriately combined.

The polyol may contain an additional polyol other than the polyol (a) (hereinafter, also simply referred to as "additional polyol"). The additional polyol is not particularly limited as long as it is a polyol having an ethylene oxide unit content of less than 50 mol% (it is not necessary to contain an ethylene oxide unit). As the additional polyol, for example, a polyether polyol having an ethylene oxide unit content of less than 50 mol%, a polymer polyol having an ethylene oxide unit content of less than 50 mol%, a polyester polyol, or the like can be used. The additional polyol is preferably a polyether polyol having an ethylene oxide unit content of less than 50 mol% from the viewpoint of various physical properties such as impact absorbability. Only one of the additional polyol may be used, or two or more thereof may be used in combination.

The number of functional groups of the additional polyol is not particularly limited. The number of functional groups of the additional polyol is preferably less than 3, more preferably 2.5 or less, and still more preferably 2. The number of functional groups of the additional polyol is usually 2 or more.

When the number of functional groups of the additional polyol is the above value, formation of a network structure can be suppressed when the polyol and the isocyanate react with each other. It is presumed that in the polyurethane foam formed in this manner, entanglement of polyurethane molecules during compression is suppressed, and the stress relaxation rate and the hysteresis loss rate are reduced.

The number-average molecular weight of the additional polyol is not particularly limited. The number-average molecular weight of the polyol is preferably 2,000 or more and 20,000 or less, more preferably 2,500 or more and 15,000 or less, and still more preferably 3,000 or more and 10,000 or less.

Examples of the additional polyol include polyether polyols containing PO units, butylene oxide units, and the like as other alkylene oxide units excluding EO units. Hereinafter, this polyether polyol is referred to as a polyol (b). As the polyol (b), a polyoxyethylene/propylene glycol copolymer having an EO unit content of less than 50 mol%, polypropylene glycol (PPG), and polytetramethylene glycol (PTMG) are preferable, and a polyoxyethylene/propylene glycol copolymer having an EO unit content of less than 50 mol% is more preferable. As the additional polyol, a polyol other than the polyol (b) may be used as long as characteristics such as rebound resilience, stress relaxation rate, and hysteresis loss rate of the polyurethane foam are not impaired. Only one of the additional polyol other than the polyol (b) may be used, or two or more thereof may be used in combination.

The EO unit content in the polyol (b) is not particularly limited. For example, the EO unit content in the polyol (b) is preferably more than 0 mol%, more preferably 10 mol% or more, and still more preferably 15 mol% or more, from the viewpoint of reducing the stress relaxation rate and the hysteresis loss rate. The upper limit of the EO unit content in the polyol (b) is not particularly limited, and may be less than 50 mol%.

The content of the polyol (b) is not particularly limited. The content of the polyol (b) is preferably 5 parts by mass or more, more preferably 8 parts by mass or more, and still more preferably 12 parts by mass or more when the total amount of the polyol is 100 parts by mass, from the viewpoint of improving the cushioning property. The content of the polyol (b) is preferably 50 parts by mass or less, more preferably 40 parts by mass or less, and still more preferably 30 parts by mass or less from the viewpoint of sufficiently blending the polyol (a) to secure the softness of the front surface. From these viewpoints, the content of the polyol (b) is preferably 5 parts by mass or more and 50 parts by mass or less, more preferably 8 parts by mass or more and 40 parts by mass or less, and still more preferably 12 parts by mass or more and 30 parts by mass or less.

When the polyol (a) and the polyol (b) are used in combination, the cushioning property of the polyurethane foam can be improved. The reason is not clear, but is presumed as follows.

When only the polyol (a) is used as the polyol, a rough foam having a low cushioning property is obtained. When only the polyol (a) is used as the polyol, the components of the polyol are homogenized, and the reaction proceeds quickly, which is considered to be a cause of the decrease in cushioning property. It is presumed that when the polyol (a) and the polyol (b) that is a polyether polyol having a property different from that of the polyol (a), are used in combination as the polyol, the reaction can be moderated, and the cushioning property can be improved.

(1.2) Foaming agent

The foaming agent is an optional component. As the foaming agent, water, alternative fluorocarbon, or a hydrocarbon such as pentane can be used singly or in combination. As the foaming agent, water is particularly preferable. In the case of water, carbon dioxide gas is generated during the reaction between the polyol and the isocyanate, and foaming is performed by the carbon dioxide gas. The amount of water as the foaming agent is preferably 1.0 parts by mass or more and 4.0 parts by mass or less, more preferably 1.5 parts by mass or more and 3.5 parts by mass or less, and still more preferably 2.0 parts by mass or more and 3.0 parts by mass or less with respect to 100 parts by mass of the polyol.

(1.3) Catalyst

The catalyst is an optional component. As the catalyst, a known catalyst for a polyurethane foam can be used. Examples of the catalyst include a resinization catalyst and a foaming catalyst. The resinization catalyst is a catalyst that promotes the urethanization reaction (resinization reaction) between the polyol and the isocyanate. The resinization catalyst is not limited, and examples thereof include amine-based catalysts such as triethylenediamine, 1,2-dimethylimidazole, N·(N',N'-dimethylaminoethyl)-morpholine, tetramethylguanidine, dimethylaminoethanol, N-methyl-N'-(2hydroxyethyl)-piperazine, N,N,N',N'-tetramethylpropane 1,3-diamine, N,N'-dimethylpiperazine, N,N,N',N'-tetramethylhexane-1,6-diamine, N,N,N',N'',N''-pentamethyldipropylene-triamine, N-(2-hydroxyethyl)morpholine, ethylene glycol bis(3-dimethyl)-aminopropyl ether, N,N-dimethylcyclohexylamine, and N-methyl-N'-(2dimethylamino)ethylpiperazine. The foaming catalyst is a catalyst that promotes the reaction between isocyanate and water to generate carbon dioxide gas. The foaming catalyst is not limited, and examples thereof include amine-based catalysts such as bis(2-dimethyl-laminoethyl)ether, triethylamine, dimethylaminoethoxyethanol, N,N,N'-trimethylaminoethyl-ethanolamine, and N,N,N',N'',N''-pentamethyldiethylenetriamine.
The total amount of the catalyst is preferably 0.2 parts by mass or more and 3.0 parts by mass or less with respect to 100 parts by mass of the polyol.

(1.4) Foam stabilizer

The foam stabilizer is an optional component. The foam stabilizer may be any one that is usually employed as a urethane foam raw material, and examples thereof include silicone-based compounds and nonionic surfactants. The amount of the foam stabilizer is preferably 0.05 parts by mass or more and 2.0 parts by mass or less with respect to 100 parts by mass of the polyol.

(1.5) Crosslinking agent

The crosslinking agent is an optional component. The crosslinking agent is blended to improve the hardness and tear strength of the polyurethane foam, and is particularly effective for increasing the hardness.
Examples of the crosslinking agent include polyhydric alcohols such as trimethylolpropane, glycerol, 1,4-butanediol, and diethylene glycol, and amines such as ethanolamines and polyethylene polyamines. Two or more crosslinking agents may be used. The total amount of the crosslinking agent is preferably 0.1 parts by mass or more and 6.0 parts by mass or less with respect to 100 parts by mass of the polyol.

(1.6) Isocyanate

The isocyanate is not particularly limited. As the isocyanate, an MDI-based isocyanate (diphenylmethane diisocyanate-based isocyanate) is preferable. When the MDI-based isocyanate is used, the front surface 10A of the polyurethane foam can have a softer touch than when TDI (toluene diisocyanate) is used, for example.
Specific examples of the MDI-based isocyanate include: monomeric MDI such as 2,2'-diphenylmethane diisocyanate (2,2'-MDI), 2,4'-diphenylmethane diisocyanate (2,4'-MDI), and 4,4'-diphenylmethane diisocyanate (4,4'-MDI); polymeric MDI which is a mixture of diphenylmethane diisocyanate and polymethylene polyphenylene polyisocyanate; carbodiimide-modified products, urethane-modified products, urea-modified products, allophanate-modified products, biuret-modified products, and isocyanurate-modified products thereof; and MDI prepolymers obtained by reacting these isocyanates with polyols. A plurality of types of MDI-based isocyanates may be used in combination.

Among these, the isocyanate preferably contains carbodiimide-modified diphenylmethane diisocyanate, more preferably contains monomeric MDI and carbodiimide-modified diphenylmethane diisocyanate, and further preferably is a mixture of a monomeric MDI, carbodiimide-modified diphenylmethane diisocyanate, and polymeric MDI. The total amount of the monomeric MDI and the carbodiimide-modified diphenylmethane diisocyanate is preferably 60 parts by mass or more, more preferably 70 parts by mass or more, and still more preferably 80 parts by mass or more when the total amount of the isocyanate is 100 parts by mass, from the viewpoint of suppressing formation of a network structure when the polyol and the isocyanate react with each other. The upper limit value of the total amount of the monomeric MDI and the carbodiimide-modified diphenylmethane diisocyanate is not particularly limited, and may be 100 parts by mass. The mass ratio between the total amount of monomeric MDI and carbodiimide-modified diphenylmethane diisocyanate and the amount of polymeric MDI is preferably 60 : 40 to 100 : 0, more preferably 70 : 30 to 98 : 2, and still more preferably 80 : 20 to 96 : 4.

The isocyanate index (INDEX) is preferably 80 or more, preferably 90 or more, still more preferably 97 or more, particularly preferably 100 or more. The isocyanate index is preferably 120 or less, more preferably 110 or less. The isocyanate index can be, for example, a range obtained by combining the upper limit value and the lower limit value, and the index can be, for example, 97 or more and 120 or less.

The isocyanate index is a value obtained by multiplying a value obtained by dividing the number of moles of isocyanate groups in the isocyanate by the total number of moles of active hydrogen groups such as hydroxyl groups of the polyol and water as a foaming agent, by 100, and is calculated by [NCO equivalent of isocyanate/active hydrogen equivalent $\times$ 100].

(1.7) Other components

Examples of an additive to be appropriately blended in addition include a flame retardant and a colorant.

The flame retardant is blended to reduce flammability of the polyurethane foam. Examples of the flame retardant include known liquid flame retardants and solid flame retardants. Examples thereof include: halogenated polymers such as polyvinyl chloride, chloroprene rubber, and chlorinated polyethylene; phosphoric acid esters and halogenated phosphoric acid ester compounds, organic flame retardants such as melamine resins and urea resins; and inorganic flame retardants such as antimony oxide and aluminum hydroxide. The flame retardant is not limited to one type, and two or more types may be used in combination. The total amount of the flame retardant is preferably 0.1 parts by mass or more and 6.0 parts by mass or less with respect to 100 parts by mass of the polyol.

The colorant is blended in order to make the polyurethane foam have an appropriate color, and a colorant corresponding to the desired color is used. Examples of the colorant include a pigment and graphite.

(2) Physical property of seat pad 10

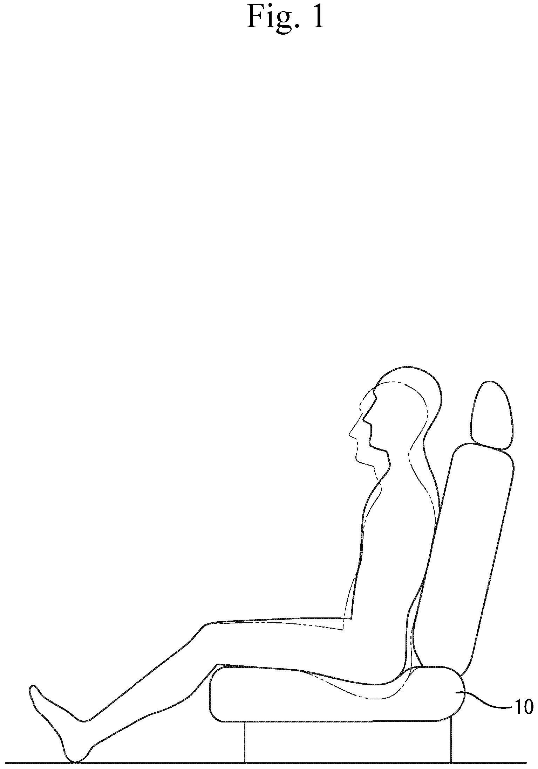

In the present disclosure, the surface on the side of a seated person in a state where the seated person is seated on the seat pad 10 is referred to as a front surface 10A of the seat pad 10, and the surface opposite to the front surface 10A is referred to as a back surface 10B of the seat pad 10. The front surface 10A of the seat pad 10 can be suitably molded, when the seat pad 10 is molded using a molding die, as a surface in contact with a bottom surface of the lower mold, for example. When the seat pad 10 is mounted on a vehicle, the front surface 10A of the seat pad 10 normally faces upward. In Fig. 1, the upper side is indicated by an arrow UP, and the lower side is indicated by an arrow DW.

The size and shape of the seat pad 10 are not particularly limited as long as it can support the buttocks or the like (for example, buttocks, back, waist) of the seated person. The thickness of the portion of the seat pad 10 that supports the buttocks of the seated person is, for example, 20 mm or more, 30 mm or more, preferably 40 mm or more, more preferably 50 mm or more, and still more preferably 60 mm or more. The thickness of the portion of the seat pad 10 is usually 120 mm or less, and may be, for example, 100 mm or less, 80 mm or less, 75 mm or less, or 70 mm or less.

Characteristics regarding the softness of the front surface of the seat pad 10 described below are measurement results of a test piece, but similar characteristics are shown in the product shape.

(2.1) Asker F hardness (front surface softness)

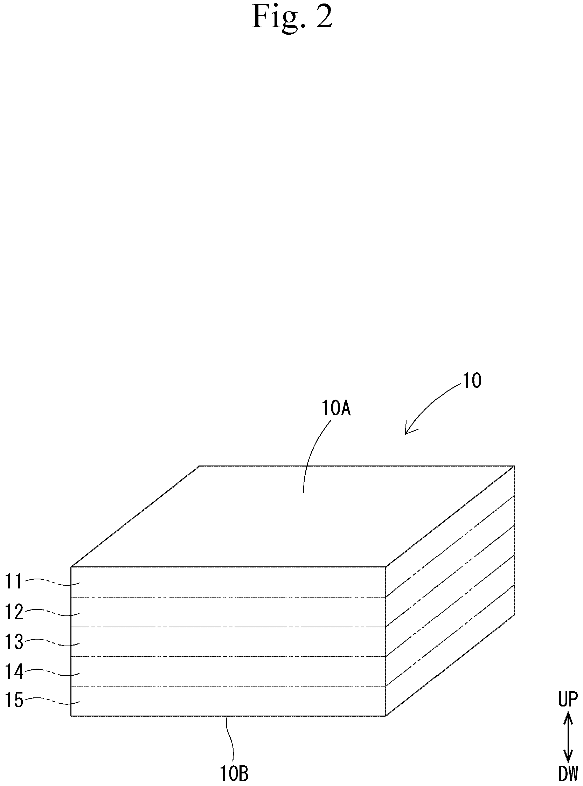

As illustrated in Fig. 2, the seat pad 10 satisfies the following Formula (1) when the portion between the front surface 10A and the back surface 10B is divided into five equal parts in the thickness direction, which are defined as a first layer 11, a second layer 12, a third layer 13, a fourth layer 14, and a fifth layer 15 in this order from the front surface 10A side, the Asker F hardness of the third layer 13 measured from the front surface 10A side is defined as F3, and the Asker F hardness of the first layer 11 measured from the front surface 10A side is defined as F1. From the viewpoint of maintaining the posture of the seated person while securing the softness of the front surface, the seat pad 10 preferably satisfies any one of the following Formulas (2) to (4).

$$F1/F3 < 1.0 \qquad \ldots (1)$$

$$F1/F3 \leq 0.85 \qquad \ldots (2)$$

$$F1/F3 \leq 0.70 \qquad \ldots (3)$$

$$F1/F3 \leq 0.65 \qquad \ldots (4)$$

Further, the seat pad 10 may satisfy, for example, any one of the following Formulas (5) to (7).

$$0.20 \leq F1/F3 \qquad \ldots (5)$$

$$0.30 \leq F1/F3 \qquad \ldots (6)$$

$$0.40 \leq F1/F3 \qquad \ldots (7)$$

From these viewpoints, the seat pad 10 preferably satisfies $0.20 \leq F1/F3 \leq 0.85$, more preferably satisfies $0.30 \leq F1/F3 \leq 0.70$, and still more preferably satisfies $0.40 \leq F1/F3 \leq 0.65$.

In the measurement of the Asker F hardness, an Asker hardness meter F type is used, the Asker hardness meter F type is installed on a test piece, and a value after a lapse of 20 seconds is read. The test piece for measuring the Asker F hardness has a square plate shape with 400 mm of length and width. The thickness of the test piece is a thickness obtained by dividing the seat pad 10 into five equal parts in the thickness direction. The Asker F hardness F1 is measured by installing the Asker hardness meter F type at the center of the front surface 10A of the first layer 11. The Asker F hardness F3 is measured by installing the Asker hardness meter F type at the center of the surface of the third layer 13 on the front surface 10A side. In the following description, Asker F hardness of the second layer 12 measured from the front surface 10A side is defined as F2, and the Asker F hardness of the fourth layer 14 measured from the front surface 10A side is defined as F4. The Asker F hardness F2 is measured by installing the Asker hardness meter F type at the center of the surface of the second layer 12 on the front surface 10A side. The Asker F hardness F4 is measured by installing the Asker hardness meter F type at the center of the surface of the fourth layer 14 on the front surface 10A side. For the fifth layer 15, the Asker F hardness measured from the back surface 10B side is defined as F5. The Asker F hardness F5 is measured by installing the Asker hardness meter F type at the center of the back surface 10B of the fifth layer 15.

The Asker F hardness in each layer of the seat pad 10 is not particularly limited as long as the above requirements are satisfied. The Asker F hardness in each layer of the seat pad 10 may further satisfy one or more of the following requirements.

The seat pad 10 preferably satisfies F1/F2 < 1.0 from the viewpoint of suitably holding the posture of the seated person while securing the softness of the front surface. With such a configuration, sufficient hardness can be secured in a portion at a distance of 1/5 or more of the thickness of the seat pad 10 from the front surface, and the seat pad 10 in which only the surface layer portion of 20% or less of the total thickness is soft can be suitably realized. Further, the seat pad 10 may satisfy any one of Formulas (8) to (10).

$$0.30 \leq F1/F2 \leq 0.85 \qquad \ldots (8)$$

$$0.30 \leq F1/F2 \leq 0.70 \qquad \ldots (9)$$

$$0.40 \leq F1/F2 \leq 0.65 \qquad \ldots (10)$$

The seat pad 10 may satisfy any one of the following Formulas (11) to (13) from the viewpoint of securing the hardness of the back surface 10B side of the seat pad 10 while securing the softness of the front surface. When any one of the Formulas (11) to (13) is satisfied, the posture of the seated person can be suitably maintained without placing a separate polyurethane foam having higher hardness than the front surface 10A side (so-called placing slab) on the back surface 10B side, for example.

$$0.55 \leq F1/F5 \leq 0.90 \qquad \ldots (11)$$

$$0.60 \leq F1/F5 \leq 0.85 \quad \ldots(12)$$

$$0.65 \leq F1/F5 \leq 0.80 \quad \ldots(13)$$

More specifically, the seat pad 10 is preferably made of polyurethane foam that exhibits the following hardness, when a regular quadrangular prism-shaped sample having a length of 400 mm, a width of 400 mm, and a thickness of 100 mm is prepared and the Asker F hardness of each layer is measured.

The Asker F hardness F1 is preferably 60 or less, more preferably 50 or less, and still more preferably 40 or less from the viewpoint of the softness of the front surface. The Asker F hardness F1 is preferably 12 or more, more preferably 15 or more, and still more preferably 20 or more from the viewpoint of ease of production. From these viewpoints, the Asker F hardness F1 is preferably 12 or more and 60 or less, more preferably 15 or more and 50 or less, and still more preferably 20 or more and 40 or less.

The Asker F hardness F3 is preferably 18 or more, more preferably 20 or more, and still more preferably 30 or more from the viewpoint of maintaining the posture of the seated person. The Asker F hardness F3 is preferably 80 or less, more preferably 75 or less, and still more preferably 70 or less from the viewpoint of ease of production. From these viewpoints, the Asker F hardness F3 is preferably 18 or more and 80 or less, more preferably 20 or more and 75 or less, and still more preferably 30 or more and 70 or less.

The absolute value of the difference between F1 and F3 ($|F3-F1|$) is preferably 4 or more, and may be 10 or more, 15 or more, 20 or more, or 25 or more from the viewpoint of the softness of the front surface and maintaining the posture of the seated person. The upper limit value of the absolute value of the difference between F1 and F3 is not particularly limited, and may be, for example, 50 or less, 45 or less, or 40 or less.

The Asker F hardness F2 is preferably 18 or more and 80 or less, more preferably 20 or more and 75 or less, and still more preferably 30 or more and 70 or less from the viewpoint of maintaining the posture of the seated person and ease of production.

The Asker F hardness F4 is preferably 18 or more and 80 or less, more preferably 20 or more and 75 or less, and still more preferably 30 or more and 70 or less from the viewpoint of securing hardness of the back surface 10B side of the seat pad 10 and ease of production.

The Asker F hardness F5 is preferably 15 or more and 65 or less, more preferably 18 or more and 60 or less, and still more preferably 25 or more and 55 or less from the viewpoint of securing hardness of the back surface 10B side of the seat pad 10 and ease of production.

The absolute value of the difference between F2 and F3 ($|F3-F2|$) is preferably 6 or less, and more preferably 5 or less, from the viewpoint of maintaining the posture of the seated person. The lower limit value of the absolute value of the difference between F2 and F3 is 0.

The absolute value of the difference between F4 and F3 ($|F3-F4|$) is preferably 5 or less, and more preferably 4 or less, from the viewpoint of maintaining the posture of the seated person. The lower limit value of the absolute value of the difference between F4 and F3 is 0.

The Asker F hardness of each layer of the seat pad 10 can be controlled, for example, by adjusting the type of components contained in the composition of the polyurethane foam, the blending proportion of each component, and the like. For example, when the addition amount of the foaming agent is increased, the Asker F hardness F3 of the third layer 13 can be increased while the Asker F hardness F1 of the first layer 11 is maintained. For example, when the addition amount of the crosslinking agent is reduced, the Asker F hardness F3 of the third layer 13 can be increased while the Asker F hardness F1 of the first layer 11 is maintained. When the isocyanate index is increased, F1/F3 tends to be decreased. Further, when the seat pad 10 is a molded foam, the Asker F hardness of each layer can be controlled by appropriately setting the orientation of the molding die with respect to the vertical direction and thereby adjusting the reactivity during molding.

The hardness of each layer of the seat pad 10 exhibits similar characteristics even when a hardness measurement method such as 25% hardness (in accordance with JIS K6400-2 (2012 version) Method D) is used instead of the hardness measurement method described above.

(2.2) Density

The density of the central portion of the seat pad 10 excluding the front surface 10A and the back surface 10B is not particularly limited. From the viewpoint of weight reduction, the density is preferably 100 kg/m$^3$ or less, more preferably 80 kg/m$^3$ or less, and still more preferably 75 kg/m$^3$ or less. The lower limit value of the density is not particularly limited, but is usually 20 kg/m$^3$ or more. From these viewpoints, the density is preferably 20 kg/m$^3$ or more and 100 kg/m$^3$ or less, and can be set in a range in which the lower limit value and the upper limit value are appropriately combined.

The density of the central portion excluding the front surface 10A and the back surface 10B can be measured as follows.

A rectangular parallelepiped test piece having a length of 100 mm, a width of 100 mm, and a height of 50 mm excluding the skins is taken from the central portion of the seat pad 10. A height direction of the test piece is made to coincide with a front surface-back surface direction of the seat pad 10. The mass of the collected test piece is measured, and the mass of the test piece is divided by the volume to calculate the density $(kg/m^3)$ of the central portion.

(2.3) 25% Hardness

The 25% hardness of the seat pad 10 (in accordance with JIS K6400-2 (2012 version) Method D) is not particularly limited. The 25% hardness of the entire seat pad 10 is preferably 80 N or more and 400 N or less, more preferably 120 N or more and 300 N or less, and still more preferably 160 N or more and 280 N or less.

The test piece to be measured for hardness is a rectangular parallelepiped having a length of 400 mm a width of 400 mm including the front and back skins. For example, in Experimental Examples 1 to 6 and 8 to 10 described later, a rectangular parallelepiped having a length of 400 mm, a width of 400 mm, and a height of 100 mm including the skins is used as a test piece. In Experimental Example 7 described later, a rectangular parallelepiped having a length of 400 mm, a width of 400 mm, and a height of 50 mm including the skins is used as a test piece. For the measurement, a pressurizing plate having a diameter of 200 mm is used. At the time of measurement, the test piece is placed on a support plate of a tester such that the center of the test piece corresponds to the center of the pressurizing plate.

(2.4) Hysteresis loss rate

The hysteresis loss rate (in accordance with JIS K6400-2 (2012 version) Method E) of the seat pad 10 is preferably 22% or less, preferably 20% or less, and may be 18% or less or 15% or less from the viewpoint of durability. The lower limit of the hysteresis loss rate is not particularly limited, but is usually 5.0% or more. When a force-deflection curve is obtained in accordance with JIS K6400-2 (2012 version) Method E, the load at which it turns from pressurization to decompression during compression of the seat pad is set at 980 N.

The test piece used for the measurement is obtained as follows. The entire seat pad 10 including the skins is used as the test piece. For example, in Experimental Examples 1 to 6 and 8 to 10 described later, a rectangular parallelepiped having a length of 400 mm, a width of 400 mm, and a height of 100 mm including the skins is used as a test piece. In Experimental Example 7 described later, a rectangular parallelepiped having a length of 400 mm, a width of 400 mm, and a height of 50 mm including the skins is used as a test piece. A height direction of the test piece is made to coincide with a front surface-back surface direction of the seat pad 10.

(2.5) Compression deflection coefficient

The compression deflection coefficient (in accordance with JIS K6400-2 (2012 version) Method E) of the seat pad 10 is preferably 2.9 or less, and may be 2.7 or less or 2.5 or less from the viewpoint of reducing a bottom touch feeling. The lower limit value of the compression deflection coefficient of the seat pad 10 is not particularly limited, and may be, for example, 2.0 or more, or 2.2 or more.

The test piece and the method for acquiring the force-deflection curve used in the measurement is the same as the test piece and the method for acquiring the force-deflection curve in (2.4) Measurement of hysteresis loss rate.

(2.6) Stress relaxation rate

The stress relaxation rate of the seat pad 10 is preferably 24% or less, more preferably 20% or less, and still more preferably 15% or less from the viewpoint of durability, and it may be 12% or less, 10% or less, 9.0% or less, or 8.0% or less. The lower limit value of the stress relaxation rate is not particularly limited, and may be, for example, 1.0% or more. The smaller the stress relaxation rate is, the smaller the amount of fatigue of the urethane after seating is, and the better the durability is. The stress relaxation rate tends to increase as the thickness of the seat pad 10 decreases. The technology of the present disclosure is particularly useful in that the stress relaxation rate can be reduced even in the seat pad 10 with a reduced thickness.

The stress relaxation rate (%) can be measured as follows.

The entire seat pad 10 including the skins is used as the test piece. For example, in Experimental Examples 1 to 6 and 8 to 10 described later, a rectangular parallelepiped having a length of 400 mm, a width of 400 mm, and a height of 100 mm including the skins is used as a test piece. In Experimental Example 7 described later, a rectangular parallelepiped having a length of 400 mm, a width of 400 mm, and a height of 50 mm including the skins is used as a test piece. A height direction of the test piece is made to coincide with a front surface-back surface direction of the seat pad 10. A circular pressurizing plate with a diameter of 200 mm is used to compress the test piece by a distance of 75% of the initial thickness of the polyurethane foam at a rate of 50 mm/min. Thereafter, the load is removed, and the test piece is left for 1 minute. Then, a load is applied again at the same speed, the pressurizing plate is stopped when a load of 196 N (20 kgf) is applied, and the load after leaving for 5 minutes is read. Then, the stress relaxation rate is calculated by the following formula.

Stress relaxation rate (%) = 100 × [load when pressurizing plate is stopped (196 N) - load after leaving for 5 minutes]/ load when pressurizing plate is stopped (196 N)

(2.7) Rebound resilience

The rebound resilience (in accordance with JIS K6400-3 (2011 version)) of the seat pad 10 is preferably 70% or less, more preferably 60% or less, still more preferably 55% or less, and it may be 50% or less, 46% or less, or 44% or less from the viewpoint of improving the ride comfort performance. The lower limit value of the rebound resilience of the seat pad 10 is not particularly limited, and it may be, for example, 10% or more, 20% or more, or 30% or more.

5. Method for producing seat pad 10

The seat pad 10 can be produced by a known foaming method in which a composition is stirred and mixed to react a polyol with an isocyanate. The foaming method includes slab foaming and mold foaming, and any molding method may be used. The seat pad 10 is preferably a molded foam. Mold foaming is a method in which a mixed composition is filled in a mold and foamed in the mold. When the seat pad 10 is a molded foam, from the viewpoint of the softness of the front surface, the front surface 10A is preferably a surface in contact with the lower surface of the molding space, and the back surface 10B is preferably the surface in contact with the upper surface of the molding space.

6. Operation and effect of present embodiment

In recent years, with reduction in thickness and weight of the seat pad 10 of an automobile, a ship, an aircraft, or the like, securing of ride comfort performance has been a problem. Examples of the ride comfort performance include softness of the front surface that improves the touch of the seat at the time of seating, durability for maintaining the posture of the seated person, and the like.

Since the seat pad 10 of the present embodiment is excellent in front surface softness, a favorable touch can be realized. In addition, since the seat pad 10 of the present embodiment can secure the hardness of the central portion in the thickness direction, durability for maintaining the posture of the seated person is excellent. For example, the seat pad 10 of the present embodiment can secure ride comfort performance even though a so-called placing slab is not placed, thus contributing to weight reduction, thickness reduction, and cost reduction of the seat pad 10.

According to the present embodiment, it is possible to reduce the hysteresis loss rate and the stress relaxation rate, and to realize the seat pad 10 that is hardly flattened and has high durability (see Fig. 1).

EXAMPLES

Hereinafter, the present disclosure will be specifically described with reference to Examples. In Tables 1 and 2, when "*" is attached like "Experimental Example 1*", it indicates that it is a Comparative Example. Experimental Examples 3 to 10 are Examples, and Experimental Examples 1 and 2 are Comparative Examples.

1. Sample production

Compositions blended in the proportions shown in Table 1 were prepared, and samples for respective Experimental Examples were prepared by mold foaming. The samples for Experimental Examples 1 to 6 and 8 to 10 had a regular square pillar shape with a length of 400 mm, a width of 400 mm, and a thickness of 100 mm. The sample of Experimental Example 7 had a regular quadrangular prism shape with a length of 400 mm, a width of 400 mm, and a thickness of 50 mm.

Details of main raw materials are as follows.

· Polyol (a): polyoxyethylene/propylene glycol copolymer, EO unit content: 80 mol%, PO unit content: 20 mol%, number-average molecular weight: 4000, number of functional groups: 2, hydroxyl value: 28 mg/KOHg
· Polyol (b): polyoxyethylene/propylene glycol copolymer, EO unit content: 20 mol%, PO unit content: 80 mol%, number-average molecular weight: 4000, number of functional groups: 2, hydroxyl value: 28 mg/KOHg
· Polyol (c): polyether polyol, EO unit content: 15 mol%, number-average molecular weight: 7000, number of functional groups: 3, hydroxyl value: 24 mg/KOHg
· Polyol (d): polymer polyol, EO unit content: 15 mol%, number-average molecular weight: 5000, number of functional

**EP 4 552 534 A1**

groups: 3, hydroxyl value: 24 mg/KOHg

· Polyol (e): polyether polyol, EO unit content: 15 mol%, number-average molecular weight: 5000, number of functional groups: 3, hydroxyl value: 34 mg/KOHg

· Foaming agent: water

· Catalyst 1: resinization catalyst, triethylenediamine 33%

· Catalyst 2: foaming catalyst, bis(2-dimethylaminoethyl) ether

· Foam stabilizer 1: silicone-based foam stabilizer, product number; L-3184J, manufactured by Momentive Performance Materials

· Foam stabilizer 2: silicone-based foam stabilizer, product number; B8715LF2, manufactured by EVONIK Industries AG

· Foam stabilizer 3: silicone-based foam stabilizer, product number; B8738LF2, manufactured by EVONIK Industries AG

· Crosslinking agent 1: trimethylolpropane trimethacrylate

· Crosslinking agent 2: Glycerol

· Crosslinking agent 3: N,N-diethanolamine 80%

· Isocyanate 1: mixture of 95% of monomeric MDI (4,4'-MDI) and carbodiimide-modified diphenylmethane diisocyanate, and 5% of polymeric MDI

· Isocyanate 2: mixture of 80% of toluene diisocyanate (TDI) and 20% of polymeric MDI

[Table 1]

| | | Experimental Example 1* | Experimental Example 2* | Experimental Example 3 | Experimental Example 4 | Experimental Example 5 |
|---|---|---|---|---|---|---|
| Liquid A | Polyol (a) | - | 100 | 85 | 85 | 85 |
| | Polyol (b) | - | - | 15 | 15 | 15 |
| | Polyol (c) | 15 | - | - | - | - |
| | Polyol (d) | 41 | - | - | - | - |
| | Polyol (e) | 44 | - | - | - | - |
| | Foaming agent | 2.3 | 2.5 | 2.5 | 2.2 | 2.5 |
| | Catalyst 1 | 0.5 | 0.4 | 0.5 | 0.6 | 0.4 |
| | Catalyst 2 | 0.1 | - | - | - | - |
| | Foam stabilizer 1 | 0.3 | 0.1 | 0.1 | - | 0.1 |
| | Foam stabilizer 2 | - | - | - | 0.3 | - |
| | Foam stabilizer 3 | 0.2 | - | - | - | - |
| Blending proportion (parts by mass) | Crosslinking agent 1 | - | 2.0 | 2.0 | 2.0 | 2.0 |
| | Crosslinking agent 2 | 1.1 | - | - | - | - |
| | Crosslinking agent 3 | 1 | - | - | - | - |
| | Flame retardant | 0.3 | - | - | - | - |
| | Total of liquid A | 105.8 | 105.0 | 105.1 | 105.1 | 105.0 |
| INDEX | | 85 | 105 | 85 | 105 | 105 |
| Amount of liquid B with respect to 100 parts by mass of liquid A | | | | | | |

**14**

(continued)

| | | Experimental Example 1* | Experimental Example 2* | Experimental Example 3 | Experimental Example 4 | Experimental Example 5 |
|---|---|---|---|---|---|---|
| Liquid B (parts by mass) | Isocyanate 1 | - | 53.0 | 43.1 | 48.7 | 53.0 |
| | Isocyanate 2 | 49.6 | - | - | - | - |
| Density (kg/m3) | | 56.8 | - | 65.8 | 66.6 | 65.1 |
| 25% Hardness (N) | | 224 | - | 87 | 218 | 272 |
| Hysteresis loss rate (%) | | 18.6 | - | 20.1 | 14.9 | 15.8 |
| Compression deflection coefficient | | 2.99 | - | 2.39 | 2.33 | 2.58 |
| Stress relaxation rate (%) | | 10.7 | - | 8.7 | 6.6 | 7.7 |
| Rebound modulus (%) | | 71.8 | - | 55.1 | 42.5 | 47.2 |
| Asker F hardness | First layer (front surface) | 66 | - | 15 | 33 | 33 |
| | Second layer | 53 | - | 20 | 56 | 64 |
| | Third layer | 52 | - | 20 | 60 | 67 |
| | Fourth layer | 50 | - | 21 | 61 | 65 |
| | Fifth layer (back surface) | 64 | - | 19 | 45 | 52 |
| | First layer/second layer | 1.245 | - | 0.750 | 0.589 | 0.516 |
| | First layer/third layer | 1.269 | - | 0.750 | 0.550 | 0.493 |
| | First layer/fourth layer | 1.320 | - | 0.714 | 0.541 | 0.508 |
| | First layer/fifth layer | 1.031 | - | 0.789 | 0.733 | 0.6.5 |

[Table 2]

| | | Experimental Example 6 | Experimental Example 7 | Experimental Example 8 | Experimental Example 9 | Experimental Example 10 |
|---|---|---|---|---|---|---|
| Liquid A | Polyol (a) | 85 | 85 | 80 | 60 | 85 |
| | Polyol (b) | 15 | 15 | 20 | 40 | 15 |
| | Polyol (c) | - | - | - | - | - |
| | Polyol (d) | - | - | - | - | - |
| | Polyol (e) | - | - | - | - | - |
| | Foaming agent | 2.5 | 2.5 | 2.6 | 2.5 | 2.5 |
| | Catalyst 1 | 0.4 | 0.4 | 0.6 | 0.6 | 0.5 |
| | Catalyst 2 | - | - | - | - | - |
| | Foam stabilizer 1 | 0.1 | 0.1 | - | 0.1 | 0.1 |

(continued)

| | | | Experimental Example 6 | Experimental Example 7 | Experimental Example 8 | Experimental Example 9 | Experimental Example 10 |
|---|---|---|---|---|---|---|---|
| Blending proportion (parts by mass) | | Foam stabilizer 2 | - | - | 0.3 | - | - |
| | | Foam stabilizer 3 | - | - | - | - | - |
| | | Crosslinking agent 1 | 2.5 | 2.0 | 2.0 | 2.0 | 2.0 |
| | | Crosslinking agent 2 | | | | | |
| | | Crosslinking agent 3 | | | | | |
| | | Flame retardant | - | - | - | - | - |
| | | Total of liquid A | 105.5 | 105.0 | 105.5 | 105.2 | 105.1 |
| INDEX | | | 105 | 105 | 102.5 | 105 | 95 |
| Amount of liquid B with respect to 100 parts by mass of liquid A | | | | | | | |
| Liquid B (parts by mass) | | Isocyanate 1 | 54.0 | 53.0 | 53.6 | 53.4 | 48.2 |
| | | Isocyanate 2 | - | - | - | - | - |
| Density (kg/m3) | | | 65.2 | 65.4 | 54.8 | 65.1 | 66.6 |
| 25% Hardness (N) | | | 264 | 190 | 215 | 286 | 175 |
| Hysteresis loss rate (%) | | | 15.5 | 14.9 | 20.3 | 22.8 | 18.8 |
| Compression deflection coefficient | | | 2.47 | 2.57 | 2.44 | 2.80 | 2.46 |
| Stress relaxation rate (%) | | | 7.1 | 6.6 | 9.7 | 18.4 | 7.1 |
| Rebound modulus (%) | | | 45.8 | 47.2 | 40.2 | 38.6 | 49.1 |
| Asker F hardness | | First layer (front surface) | 36 | 24 | 26 | 43 | 28 |
| | | Second layer | 57 | 55 | 54 | 75 | 42 |
| | | Third layer | 61 | 55 | 56 | 76 | 43 |
| | | Fourth layer | 61 | 54 | 57 | 77 | 43 |
| | | Fifth layer (back surface) | 47 | 36 | 39 | 58 | 32 |
| | | First layer/second layer | 0.632 | 0.436 | 0.481 | 0.573 | 0.667 |
| | | First layer/third layer | 0.590 | 0.436 | 0.464 | 0.566 | 0.651 |
| | | First layer/fourth layer | 0.590 | 0.444 | 0.456 | 0.558 | 0.651 |
| | | First layer/fifth layer | 0.766 | 0.667 | 0.667 | 0.741 | 0.875 |

2. Evaluation method 1

A test piece was cut out from the polyurethane foam produced using the above raw materials, and the hysteresis loss rate, the stress relaxation rate, the rebound resilience, and the like were measured by the following methods. The results are shown in Tables 1 and 2. In Experimental Example 2, since demolding was not possible, physical properties were not evaluated.

(1) Density

The density ($kg/m^3$) was measured by the method described in the embodiment.

(2) 25% Hardness

The 25% hardness (N) was measured by the method described in the embodiment. That is, the 25% hardness was measured by the method described in the embodiment. That is, in Experimental Examples 1 to 6 and 8 to 10, a rectangular parallelepiped having a length of 400 mm, a width of 400 mm, and a height of 100 mm including the skins was used as the test piece. In Experimental Example 7, a rectangular parallelepiped having a length of 400 mm, a width of 400 mm, and a height of 50 mm including the skins was used as the test piece.

(3) Hysteresis loss rate

The hysteresis loss rate (%) was measured in accordance with JIS K6400-2 Method E. The smaller the numerical value, the better the posture maintaining property (durability) at the time of seating.

(4) Compression deflection coefficient

The compression deflection coefficient (%) was measured in accordance with JIS K6400-2 Method E. The smaller the numerical value, the better the vibration absorbability.

(5) Stress relaxation rate

The stress relaxation rate (%) was measured by the method described in the embodiment. The smaller the numerical value, the better the posture maintaining property (durability) at the time of seating.

(6) Rebound resilience

The rebound resilience (%) was measured in accordance with JIS K6400-3 (2011 version). Appropriately suppressing the rebound resilience can improve ride comfort performance.

3. Evaluation method 2

For each layer obtained by dividing the sample prepared using the raw materials into five equal parts in the thickness direction, the Asker F hardness was measured by the method described in the embodiment, and the ratio of the Asker F hardness of the first layer to the Asker F hardness of each layer was calculated. The results are also shown in Tables 1 and 2.

(1) Asker F hardness

The Asker F hardness of each layer from the first layer to the fifth layer was measured by the method described in the embodiment.

(2) Ratio of Asker F hardness of first layer to Asker F hardness of each layer

The ratio of the Asker F hardness of the first layer to the Asker F hardness of each layer was calculated by dividing the Asker F hardness of the first layer by the Asker F hardness of each layer. In Tables 1 and 2, for example, the ratio of the Asker F hardness of the first layer to the Asker F hardness of the third layer is shown in "First layer/third layer".

4. Result 1

Experimental Examples 3 to 10 satisfy the following Requirements (a) to (c).

· Requirement (a): being a seat pad made of polyurethane foam obtained from a composition containing a polyol and an isocyanate
· Requirement (b): including a polyol having an ethylene oxide unit content of 50 mol% or more when the total amount of the alkylene oxide units is 100 mol% as the polyol
· Requirement (c): satisfying F1/F3 < 1

Experimental Example 1 does not satisfy Requirement (b) or (c). Experimental Example 2 does not satisfy Requirement (a). Experimental Examples 3 to 10 satisfying Requirements (a) to (c) had good front surface softness and durability as compared with Comparative Example 1. Experimental Examples 3 to 10 satisfying Requirements (a) to (c) showed the characteristics of the first layer (F1) < the fifth layer (F5) < the third layer (F3).

Among Experimental Examples 3 to 10, Experimental Examples 4 to 10 further satisfies the following Requirement (d). In Experimental Examples 4 to 10 further satisfying Requirement (d), the softness of the front surface was still more favorable.

· Requirement (d): satisfying $0.30 \leq F1/F3 \leq 0.70$

Experimental Examples 3 to 10 further satisfy the following Requirement (e). In Experimental Examples 3 to 10 further satisfying Requirement (e), a polyurethane foam having good front surface softness and durability was suitably obtained.

• Requirement (e): including carbodiimide-modified diphenylmethane diisocyanate as the isocyanate

Experimental Examples 3 to 10 further satisfy the following Requirement (f). Experimental Examples 3 to 10 further satisfying Requirement (f) had good vibration absorbency.

· Requirement (f): having a compression deflection coefficient of 2.8 or less as measured in accordance with JIS K6400-2 (2012 version) Method E

Among Experimental Examples 3 to 10, Experimental Examples 4 to 10 further satisfy the following Requirement (g). Experimental Examples 4 to 10 further satisfying Requirement (g) had excellent ride comfort performance.

· Requirement (g): having a rebound resilience of 55% or less as measured in accordance with JIS K6400-3 (2011 version)

Among Experimental Examples 3 to 10, Experimental Examples 3 to 8 and 10 further satisfy the following Requirement (h). Experimental Examples 3 to 8 and 10 further satisfying Requirement (h) had good durability.

• Requirement (h): having a stress relaxation rate of 15% or less

Among Experimental Examples 3 to 10, Experimental Examples 4 to 7 and 10 further satisfy the following Requirement (i). Experimental Examples 4 to 7 and 10 further satisfying Requirement (i) had good durability.

• Requirement (i): having a hysteresis loss rate of 20% or less as measured in accordance with JIS K6400-2 (2012 version) Method E

Experimental Example 5 is compared with Experimental Example 4 in which the addition amount of the foaming agent is smaller than that in Experimental Example 5. In Experimental Example 5 and Experimental Example 4, the Asker F hardness of the first layer was substantially equal. In Experimental Example 5, the first layer/the third layer (F1/F3) was smaller than that in Experimental Example 4. From this result, it was suggested that the softness and durability of the front surface can be improved by increasing the addition amount of the foaming agent. In addition, it was suggested that the technology of the present disclosure is effective even in the case of reducing the density of the seat pad.
Experimental Example 5 is compared with Experimental Example 6 in which the addition amount of the crosslinking agent is larger than that in Experimental Example 5. In Experimental Example 5 and Experimental Example 6, the Asker F hardness of the first layer was substantially equal. In Experimental Example 5, the first layer/the third layer (F1/F3) was smaller than that in Experimental Example 6. From this result, it was suggested that the softness and durability of the front surface can be improved by reducing the amount of the additive.

Experimental Example 5 with a thickness of 100 mm and Experimental Example 7 with a thickness of 50 mm are compared. Although the Asker F hardness of each layer of Experimental Example 7 was smaller than the Asker F hardness of the layer at the same position of Experimental Example 5, Experimental Example 7 also showed characteristics of first layer (F1) < fifth layer (F5) < third layer (F3) as in Experimental Example 5. From this result, it was suggested that that the technology of the present disclosure is also effective for a thin seat pad.

Experimental Example 4 is compared with Experimental Example 8 having a density lower than that of Experimental Example 4. Although the Asker F hardness of each layer of Experimental Example 8 was slightly smaller than the Asker F hardness of the layer at the same position of Experimental Example 4, Experimental Example 8 also showed characteristics of first layer (F1) < fifth layer (F5) < third layer (F3) as in Experimental Example 4. From this result, it was suggested that the technology of the present disclosure is also effective for a low density seat pad.

Experimental Example 5 with the isocyanate index 105, Experimental Example 3 with the isocyanate index 85, and Experimental Example 10 with the isocyanate index 95 are compared. In Experimental Example 3, the first layer/the third layer (F1/F3) was 0.750. In Experimental Example 10, the first layer/the third layer (F1/F3) was 0.651. In Experimental Example 5, the first layer/the third layer (F1/F3) was 0.493. From this result, it was suggested that as the isocyanate index was larger, the softness of the front surface was able to be improved.

Experimental Example 5 and Experimental Example 9 in which the blending proportion of the polyol is different from each other are compared. The polyol ratio in Experimental Example 5 was polyol (a) : polyol (b) = 85 : 15. The polyol ratio in Experimental Example 9 was polyol (a) : polyol (b) = 60 : 40. Although the Asker F hardness of each layer of Experimental Example 9 was larger than the Asker F hardness of the layer at the same position of Experimental Example 5, Experimental Example 9 also showed characteristics of first layer (F1) < fifth layer (F5) < third layer (F3) as in Experimental Example 5. The stress relaxation rate of 7.7% in Experimental Example 5 was smaller than the stress relaxation rate of 18.4% in Experimental Example 9. From this result, it was suggested that the higher the content of the polyol (a), the more the durability can be improved.

The following inventions can also be grasped from the above experimental examples. In the following description of specific matters of the invention, the above description is appropriately incorporated.

· A polyurethane foam obtained from a composition containing a polyol and an isocyanate, wherein

as the polyol, a polyol in which an ethylene oxide unit content is 50 mol% or more when a total amount of alkylene oxide units is 100 mol% is contained, and
the composition has an isocyanate index of 97 or more.

· A polyurethane foam obtained from a composition containing a polyol and an isocyanate, wherein

as the polyol, a polyol in which an ethylene oxide unit content is 50 mol% or more when a total amount of alkylene oxide units is 100 mol% is contained, and
at least one or more of Requirements (e), (f), (g), (h), and (i) described above are satisfied.

5. Results 2

Experimental Examples 3 to 10 satisfy Requirements (a) and (f).

· Requirement (a): being a seat pad made of polyurethane foam obtained from a composition containing a polyol and an isocyanate
· Requirement (f): having a compression deflection coefficient of 2.8 or less as measured in accordance with JIS K6400-2 (2012 version) Method E

Experimental Example 1 does not satisfy Requirement (f). In Experimental Examples 3 to 10 satisfying Requirements (a) and (f), bending was better, and a bottom touch feeling was less likely to be felt than that in Comparative Example 1.

Among Experimental Examples 3 to 10, Experimental Examples 4 to 10 further satisfy the following Requirement (g). Experimental Examples 4 to 10 further satisfying Requirement (g) had excellent ride comfort performance.

· Requirement (g): having a rebound resilience of 55% or less as measured in accordance with JIS K6400-3 (2011 version)

Among Experimental Examples 3 to 10, Experimental Examples 3 to 8 and 10 further satisfy the following Requirement (h). Experimental Examples 3 to 8 and 10 further satisfying Requirement (h) had good durability.

· Requirement (h): having a stress relaxation rate of 15% or less

Among Experimental Examples 3 to 10, Experimental Examples 4 to 7 and 10 further satisfy the following Requirement (i). Experimental Examples 4 to 7 and 10 further satisfying Requirement (i) had good durability.

· Requirement (i): having a hysteresis loss rate of 20% or less as measured in accordance with JIS K6400-2 (2012 version) Method E

Experimental Example 5 with the isocyanate index 105, Experimental Example 3 with the isocyanate index 85, and Experimental Example 10 with the isocyanate index 95 are compared. In Experimental Example 3 and Experimental Example 10, the compression deflection coefficient was smaller than that in Experimental Example 5, and the deflection amount in a high load region (700 N or more and 980 N or less) was large.
Experimental Example 5 satisfying Requirements (a) and (f) is compared with Experimental Example 1 satisfying Requirement (a) and not satisfying Requirement (f). In Experimental Example 5, the 25% hardness was larger than that in Experimental Example 1 by about 50 N, but the compression deflection coefficient was smaller than that in Experimental Example 1, and the deflection amount in a high load region (700 N or more and 980 N or less) was large.
Experimental Example 4 with 85 parts by mass of the polyol (a), Experimental Example 8 with 80 parts by mass of the polyol (a), and Experimental Example 9 with 60 parts by mass of the polyol (a) are compared to each other. It was found that when the amount of the polyol (a) decreases, the compression deflection coefficient increases, and the deflection amount in a high load region (700 N or more and 980 N or less) decreases.

6. Effects of Example

According to the above Examples, it is possible to provide a seat pad having good ride comfort performance.
The present disclosure is not limited to the Examples described in detail above, and various modifications or changes can be made within the scope of the present disclosure.

REFERENCE SIGNS LIST

| 10, 110 | seat pad |
|---|---|
| 10A | front surface |
| 10B | back surface |
| 11 | first layer |
| 12 | second layer |
| 13 | third layer |
| 14 | fourth layer |
| 15 | fifth layer |

**Claims**

1. A seat pad made of a polyurethane foam obtained from a composition containing a polyol and an isocyanate, the seat pad having a compression deflection coefficient of 2.8 or less as measured in accordance with JIS K6400-2 (2012 version) Method E.

2. A seat pad made of a polyurethane foam obtained from a composition containing a polyol and an isocyanate, wherein

as the polyol, a polyol having an ethylene oxide unit content of 50 mol% or more when a total amount of alkylene oxide units is 100 mol% is contained, and

$$F1/F3 < 1.0$$

is satisfied when
a portion between a front surface and a back surface are divided into five equal parts in a thickness direction, which are defined as a first layer, a second layer, a third layer, a fourth layer, and a fifth layer in this order from the front surface side,
an Asker F hardness of the third layer measured from the front surface side is defined as F3, and
an Asker F hardness measured from the front surface side of the first layer is defined as F1.

3. The seat pad according to claim 2,
   wherein $0.30 \leq F1/F3 \leq 0.70$ is satisfied.

4. The seat pad according to claim 2 or 3, wherein as the isocyanate, carbodiimide-modified diphenylmethane diisocyanate is contained.

5. The seat pad according to any one of claims 2 to 4, the seat pad having a compression deflection coefficient of 2.8 or less as measured in accordance with JIS K6400-2 (2012 version) Method E.

6. The seat pad according to any one of claims 2 to 5, the seat pad having a rebound resilience of 55% or less as measured in accordance with JIS K6400-3 (2011 version).

7. The seat pad according to any one of claims 2 to 6, the seat pad having a stress relaxation rate of 15% or less.

8. The seat pad according to any one of claims 2 to 7, the seat pad having a hysteresis loss rate of 20% or less as measured in accordance with JIS K6400-2 (2012 version) Method E.

# Fig. 1

10

# Fig. 2

# Fig. 3

# Fig. 4

| | |
|---|---|
| **INTERNATIONAL SEARCH REPORT** | International application No.<br>**PCT/JP2023/018699** |

**A. CLASSIFICATION OF SUBJECT MATTER**

*A47C 27/14*(2006.01)i; *A47C 7/18*(2006.01)i; *B60N 2/90*(2018.01)i; *C08G 18/00*(2006.01)i; *C08G 18/48*(2006.01)i; *C08G 18/76*(2006.01)i; *C08G 18/79*(2006.01)i; *C08G 101/00*(2006.01)n
FI: A47C27/14 A; C08G18/48 033; C08G18/79 070; C08G18/76 057; C08G18/00 F; A47C7/18; B60N2/90; C08G101:00

According to International Patent Classification (IPC) or to both national classification and IPC

**B. FIELDS SEARCHED**

Minimum documentation searched (classification system followed by classification symbols)

A47C27/14; A47C7/18; B60N2/90; C08G18/00; C08G18/48; C08G18/76; C08G18/79; C08G101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-194321 A (INOUE MTP KK) 07 November 2019 (2019-11-07)<br>paragraphs [0014], [0030] | 1 |
| X | JP 2000-070565 A (TOYO TIRE & RUBBER CO LTD) 07 March 2000 (2000-03-07)<br>paragraphs [0014], [0020] | 2-8 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/018699** |

**Box No. III**     **Observations where unity of invention is lacking (Continuation of item 3 of first sheet)**

This International Searching Authority found multiple inventions in this international application, as follows:

(Invention 1) Claim 1

    Document 1 discloses a "seat pad made of polyurethane foam obtained from a composition containing polyol and isocyanate, and having a compression refraction coefficient of 2.8 or less measured in accordance with JISK6400-2 (2012 edition) E method." Claim 1 lacks novelty in light of document 1, and thus does not have a special technical feature. Therefore, claim 1 is classified as invention 1.

(Invention 2) Claims 2-8

    It cannot be said that claims 2-8 have a technical feature identical or corresponding to that of claim 1 classified as invention 1. Thus, claims 2-8 are not considered to be inventively related to claim 1. Also, claims 2-8 are not substantially identical to or similarly closely related to any of the claims classified as invention 1.

    Therefore, claims 2-8 cannot be classified as invention 1. Therefore, claims 2-8 are classified as invention 2.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**    ☐   The additional search fees were accompanied by the applicant's protest and, where applicable, the payment of a protest fee.

                                ☐   The additional search fees were accompanied by the applicant's protest but the applicable protest fee was not paid within the time limit specified in the invitation.

                                ☐   No protest accompanied the payment of additional search fees.

Form PCT/ISA/210 (continuation of first sheet) (January 2015)

| INTERNATIONAL SEARCH REPORT | | International application No. | |
|---|---|---|---|
| Information on patent family members | | **PCT/JP2023/018699** | |

| Patent document cited in search report | | | Publication date (day/month/year) | Patent family member(s) | Publication date (day/month/year) |
|---|---|---|---|---|---|
| JP | 2019-194321 | A | 07 November 2019 | (Family: none) | |
| JP | 2000-070565 | A | 07 March 2000 | (Family: none) | |

Form PCT/ISA/210 (patent family annex) (January 2015)

**EP 4 552 534 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022108852 A
- JP 2022179573 A
- JP 2019107933 A
- JP 2022039004 A